# EUROPÄISCHE PATENTSCHRIFT

(11) **EP 3 693 618 B1**
(45) Veröffentlichungstag und Bekanntmachung des Hinweises auf die Patenterteilung: **10.05.2023**
(21) Anmeldenummer: 20156281.6
(22) Anmeldetag: 10.02.2020
(51) Int. Cl.: F16B 5/10, F16B 21/04, F16B 5/06

(54) **AUFBAU FÜR MEHRFACHEN SCHNELLVERSCHLUSS UND MEHRFACHE SCHNELLÖFFNUNG**
ASSEMBLY FOR MULTIPLE QUICK RELEASE AND MULTIPLE QUICK OPENING
STRUCTURE POUR UN VERROUILLAGE RAPIDE MULTIPLE ET UNE OUVERTURE RAPIDE MULTIPLE

(30) Priorität: 11.02.2019 DE 102019201737
(43) Veröffentlichungstag der Anmeldung: 12.08.2020
(73) Patentinhaber: QUNDIS GmbH, 99098 Erfurt (DE)
(72) Erfinder: GERNER, René, 99974 Mühlhausen (DE); SCHWARZ, Michael, 99102 Klettbach (DE)
(74) Vertreter: Liedtke & Partner Patentanwälte

(56) Entgegenhaltungen:
- EP-A1- 2 226 776
- EP-A1- 3 148 026
- DE-U- 1 751 253
- JP-A- 2004 218 795
- JP-A- 2013 063 258
- US-A1- 2013 292 532

## Beschreibung

Die Erfindung betrifft eine Verschlussanordnung nach den Merkmalen des Anspruchs 1.

Der Stand der Technik umfasst eine große Vielfalt an verschiedenen Anordnungen zum Verschluss und zum Öffnen zu einander gepaarter Teile.

Einige dieser Verschlussanordnungen sind dabei so ausgestaltet, dass Bauteile, welche durch ihren Verschluss miteinander gepaart werden können, im verbundenen Zustand nur durch eine Zerstörung eines oder mehrerer Bauteile wieder getrennt werden können.

Ebenso sind im Stand der Technik Verschlussanordnungen bekannt, welche nur durch den Gebrauch von Werkzeugen oder anderen Hilfsmitteln miteinander verbunden und voneinander wieder getrennt werden können.

Bei Verschlussanordnungen, welche ein Öffnen ohne Werkzeuge erlauben, bieten die Verschlüsse oft eine ungenügende Verschlusskraft. Im Gegensatz dazu stehen Verschlüsse, welche durch ein Werkzeug geschlossen werden. Diese benötigen oft einen hohen Kraftaufwand zum Öffnen des Verschlusses oder zum Trennen der Bauteile.

Bei vielen Lösungen im Stand der Technik, insbesondere da wo z.B. oft Werkzeuge zum Einsatz kommen, wird zum Verschließen oder zum Öffnen ein hoher Zeitaufwand benötigt.

Einige Verschlussanordnungen sind nur einmal verwendbar. Bei einer häufigeren Verwendung können die Verschlussanordnungen verschiedene Anforderungen, welche an sie gestellt werden, oft nicht mehr gänzlich erfüllen oder die zu paarenden Bauteile werden zerstört.

Die meisten Verschlusstechniken, wie beispielsweise Rasthaken oder Nieten, sind zueinander nur mit festem Anschlag möglich. Eine flexible Nutzung dieser Verbindungen an sich ändernde Bedingungen, wie sie beispielsweise ein Kabelbinder oder eine Gewindeverbindung bieten, sind bei den meisten Paarungen nicht möglich.

Die Paarungen, welche wie ein Kabelbinder einen flexiblen Anschlag bilden, haben den Nachteil, dass die Verschlusskraft mit einer größeren Überdeckung zunimmt. Eine konstante Verschlusskraft bei gleichzeitig flexiblem Anschlag ist daher nicht gegeben.

Im Stand der Technik sind zudem Paarungen mit hoher Verschlusskraft bekannt, welche oft komplexe Bewegungsabläufe erfordern. Dafür sind häufig verschiedene translatorische und rotatorische Bewegungen in wechselnder Reihenfolge notwendig. Diese Abläufe sind daher oft nur durch Menschen oder aufwendig hergestellte Maschinen durchführbar.

Im Stand der Technik ist auch beschrieben, dass häufig die Bauteile, die zur Verschlussanordnung benötigt werden, ausschließlich zum Verschluss dienen. Weitere Funktionen sind damit nicht integriert. Während eine Schraube-Mutter-Paarung ausschließlich zum Verbinden dient, kann eine Flanschverbindung gleichzeitig eine Dichtungsfläche bieten. Bei Anwendungen ohne mehrfach integrierte Funktionalität ist somit eine höhere Teilzahl notwendig, um alle benötigten Aufgaben zu erfüllen.

In der EP 3 148 026 A1 werden zweiteilige Durchführungen mit Schnappverbindung beschrieben. Eine zweiteilige, zusammenschnappbare Durchführung zum Zuführen von Signalen durch eine Platte mit gegenüberliegenden Seiten umfasst einen ersten und einen zweiten Teil, die jeweils einen Flansch mit einer durchgehenden Öffnung und ein Rohrsegment enthalten, das sich normal von einer ersten Oberfläche des Flansches erstreckt und ein Lumen aufweist, welches im Allgemeinen konzentrisch zur Öffnung angeordnet ist. Ein Paar komplementärer Eingriffsmechanismen befindet sich jeweils an distalen Endabschnitten der Rohrsegmente und ist konfiguriert, um den ersten und den zweiten Teil durch eine Öffnung in der Platte in einer zusammenschnappenden Weise miteinander zu koppeln, so dass die erste Oberfläche jedes der Flansche benachbart zu einer entsprechenden der gegenüberliegenden Seiten der Platte gehalten wird, und die Lumen der jeweiligen Rohrsegmente sind im Allgemeinen konzentrisch zueinander angeordnet.

Der Erfindung liegt die Aufgabe zu Grunde, eine gegenüber dem Stand der Technik verbesserte Verschlussanordnung anzugeben.

Die Aufgabe wird erfindungsgemäß gelöst durch eine Verschlussanordnung mit den Merkmalen des Anspruch 1.

Vorteilhafte Ausgestaltungen der Erfindung sind Gegenstand der Unteransprüche.

Eine erfindungsgemäße Verschlussanordnung umfasst mindestens einen, insbesondere reversiblen, Verschluss zwischen mindestens zwei zu verbindenden Bauteilen.

Die Bauteile sind mittels des mindestens einen Verschlusses in mindestens eine Verschlussrichtung miteinander durch Formgehemme und/oder durch Formschluss verbindbar oder verbunden, wobei der Verschluss mittels mindestens eines Gesperres, insbesondere eines reversiblen Gesperres, gesichert ist, welches zwischen beiden Bauteilen zusätzlich vorgesehen ist und ein Öffnen des Verschlusses sperrt.

Die Verschlussrichtung ist dabei eine Richtung, in welche eine Verschlusskraft bei einem Bauteil wirkt. Die Verschlusskraft wird durch den Verschluss im verbundenen Zustand beispielsweise durch ein Formgehemme, insbesondere, aber nicht ausschließlich, einen Rastverschluss, oder durch einen Formschluss, insbesondere, aber nicht ausschließlich, einen Bajonettverschluss, erzeugt. Die Verschlusskraft ist die Kraft, die der Verschluss einem, insbesondere ungewollten, Öffnen entgegensetzen kann, bevor er diesem Öffnen nachgibt, beispielsweise durch eine Zerstörung des Verschlusses. Dadurch haben die Verschlusskräfte die gleiche Orientierung wie die Verschlussrichtungen. Die Kräfte, die zum Überwinden der Verschlusskraft benötigt werden, zeigen in die entgegengesetzte Richtung zu den Verschlussrichtungen.

Das Gesperre ist insbesondere ein Funktionselement, das vorübergehend das Entstehen einer Bewegung der beiden Bauteile, insbesondere sowohl eine Bewegung des einen Bauteils als auch eine Bewegung des anderen Bauteils, insbesondere eine Relativbewegung der beiden Bauteile zueinander, vollständig verhindert. Das Gesperre blockiert somit vorteilhafterweise die Bewegung der beiden Bauteile in jede Richtung, insbesondere die Relativbewegung der beiden Bauteile zueinander, vollständig. Erst nach Entsperren des Gesperres wird die Bewegung der beiden Bauteile oder mindestens eines der beiden Bauteile in mindestens eine Richtung, insbesondere die Relativbewegung der beiden Bauteile, wieder ermöglicht. Unter Bewegung des jeweiligen Bauteils ist dabei insbesondere eine Gesamtbewegung des jeweiligen Bauteils, d. h. eine Bewegung des jeweiligen gesamten Bauteils, insbesondere relativ zum anderen Bauteil, insbesondere zum gesamten anderen Bauteil, zu verstehen. Insbesondere ist darunter nicht zu verstehen eine Bewegung lediglich eines Teils oder Bereichs oder mehrerer Teile oder Bereiche des jeweiligen Bauteils relativ zu einem oder mehreren sich nicht bewegenden anderen Teilen oder Bereichen des jeweiligen Bauteils.

Auf diese Weise wird im geschlossenen Zustand des Verschlusses der Bauteile, insbesondere des reversiblen Verschlusses der Bauteile, d. h. des Verschlusses, welcher erneut öffenbar ausgebildet ist, eine sichere Verbindung zwischen den Bauteilen ermöglicht, während ein ungewolltes und/oder zerstörungsfreies Öffnen des Verschlusses unterbunden wird. Die Verschlussanordnung übernimmt eine Doppelfunktion aus Verschließen des Verschlusses und Sperren eines ungewollten und/oder zerstörungsfreien Öffnens des Verschlusses.

Ferner ist mittels des Formgehemmes eine flexible Rasttiefe möglich. Dadurch können Bauteile, welche eine solche Verschlussanordnung umfassen, in unterschiedlichen Rasttiefen miteinander verbunden werden. So können die Bauteile in einer gewünschten Position zueinander in Verbindung gebracht werden. Handelt es sich bei den Bauteilen beispielsweise um ein Gehäuse, so ist es möglich, dass ein Nutzer die Rasttiefe des Gehäuses derart einstellt, dass er gezielt auf eine Größe von Gegenständen reagieren kann, welche innerhalb des Gehäuses gelagert werden können. Es besteht die Möglichkeit, Batterien unterschiedlichen Durchmessers zu fixieren, indem beide Bauteile derart miteinander verbunden werden, beispielsweise durch Rasten, dass die jeweilige Batterie im Inneren des Gehäuses fixiert ist.

Auch andere Arten von Gehäusen sind möglich, wie beispielsweise Gehäuse für Netzteilplatinen, Wasser- und/oder Wärmezähler, sowie Brotbüchsen, sogenannte Powerblocks oder Flansche. Auch andere Anwendungen wie beispielsweise als eine Schutzvorrichtung auf Elektrodosen oder auch als Dübel sind möglich.

Es ist auch möglich, dass die gewünschte Position der Bauteile zueinander durch ein weiteres, einzuspannendes Objekt, beispielsweise einen frei festgelegten Abstand und/oder einen integrierten Anschlag für eine Bewegung in die Verschlussrichtung, erreicht wird.

Sowohl das Formgehemme, welches beispielsweise eine Bewegung eines der Bauteile bis zu einer bestimmten Grenzkraft behindert, als auch der Formschluss, welcher beispielsweise durch ein Ineinandergreifen von mindestens zwei Verbindungspartnern eben diese miteinander verbindet, ermöglichen in Kombination mit dem Gesperre ohne zusätzliches Werkzeug und in einer zeitsparenden Art und Weise eine schnelle Montage und/oder Demontage. Es ist möglich, dass ein Formgehemme auch als Formschluss ausgebildet sein kann, und umgekehrt.

Beispielsweise erfolgt bei einer solchen Demontage ein Lösen kaskadiert in Reihe, d. h. dass zuerst das Gesperre entsperrt werden muss, bevor der Verschluss geöffnet werden kann, um so die Bauteile voneinander zu lösen. Es ist auch möglich, dass mehr als zwei Bauteile miteinander verbunden werden und über eine solche kaskadierte Reihenfolge gelöst werden können.

Auch können die Bauteile als identisch geformte Bauteile ausgebildet sein. Durch diese Ausführungsform können Bauteile einfach zusammengesetzt werden, ohne, dass ein Nutzer auf Unterschiede zwischen den Bauteilen achten muss. Ebenso wird hierdurch eine kostengünstige Produktion ermöglicht. Alternativ oder zusätzlich können die Bauteile zu sich selbst achsensymmetrisch ausgebildet sein.

In einer alternativen Ausführungsform ist es möglich, die Bauteile durch den Gebrauch von Werkzeugen miteinander zu verbinden. So ist es beispielsweise durch den Gebrauch eines Werkzeuges möglich, das Gesperre in einem entsperrten Zustand vorzuspannen. Hierdurch können die Bauteile in schneller und kraftsparender Art und Weise miteinander verbunden werden.

Des Weiteren ist es möglich, dass der Verschluss bei entsperrtem Gesperre durch Bewegung mindestens eines der Bauteile in eine jeweilige Öffnungsrichtung, insbesondere durch Bewegung der Bauteile relativ zueinander, öffenbar ist. Beispielsweise kann der Verschluss durch eine translatorische Bewegung in Öffnungsrichtung geöffnet werden. Die Öffnungsrichtung verläuft dabei senkrecht zur Verschlussrichtung. Die Verschlussanordnung kann somit für Bauteile genutzt werden, welche beispielsweise durch ihre Form ein Öffnen des Verschlusses durch eine translatorische Bewegung begünstigen. Dadurch ist es möglich, dass der Verschluss durch Entsperren des Gesperres zerstörungsfrei und ohne Hilfsmittel entsperrt werden kann.

In einer weiteren Ausführungsform ist es denkbar, dass der Verschluss bei entsperrtem Gesperre durch eine rotatorische Bewegung mindestens eines der Bauteile in eine jeweilige Öffnungsrichtung bewegt und somit geöffnet werden kann, wobei die Öffnungsrichtung senkrecht zur Verschlussrichtung verläuft, d. h. rotierend um eine Achse parallel zur Verschlussrichtung. Durch diese Art der Verschlussanordnung kann diese für Bauteile genutzt werden, welche beispielsweise durch ihre Form ein Öffnen des Verschlusses durch eine rotatorische Bewegung begünstigen.

Solche Ausführungsformen sind des Weiteren automatengerecht, da eine Führung der Bauteile durch ihre Form erfolgt und keine komplexen Bewegungsabläufe ausgeführt werden, sondern lediglich simple Grundbewegungen.

Eine weitere Ausführungsform kann derart ausgebildet sein, dass der Verschluss durch mindestens eine translatorische Bewegung und mindestens eine rotatorische Bewegung öffenbar ist und somit geöffnet werden kann. Durch eine Kombination der mindestens zwei Bewegungen ist es möglich, dass die Verschlussanordnung auch für komplexe Bauteile genutzt werden kann, welche sowohl eine translatorische als auch eine rotatorische Bewegung zum Öffnen des Verschlusses erlauben. Ebenso kann dadurch die Verschlusskraft der Verschlussanordnung weiter erhöht werden.

Es ist möglich, dass unabhängig von der Form der Bauteile verschiedene Bewegungen in Öffnungsrichtung zum Öffnen des Verschlusses gewählt sein können. So ist es beispielsweise möglich, unabhängig von einer quaderförmigen oder zylindrischen Form der Bauteile eine rotatorische Bewegung, eine translatorische Bewegung oder eine Kombination aus beiden Bewegungen für ein Öffnen des Verschlusses bei entsperrtem Gesperre zu nutzen.

Darüber hinaus ist es möglich, dass an dem Verschluss ein Anschlag ausgebildet ist. Der Anschlag kann in geschlossenem Zustand des Verschlusses eine Bewegung der Bauteile entgegen ihrer jeweiligen Öffnungsrichtung verhindern. Dadurch ist es beispielsweise möglich, dass der Verschluss nicht entgegen der Öffnungsrichtung geöffnet werden kann.

Ferner ist es denkbar, dass das Gesperre zum Entsperren in eine Entsperrungsrichtung bewegbar ist. Dabei verläuft die Entsperrungsrichtung senkrecht zur Verschlussrichtung und zur Öffnungsrichtung. Durch diesen Verlauf kann ein ungewolltes Entsperren des Gesperres und Öffnen des Verschlusses verhindert werden. Dadurch sind eine sichere Montage und/oder eine sichere Nutzung möglich.

Das Gesperre ist oder wird beispielsweise ausschließlich durch eines der beiden Bauteile oder ausschließlich durch die beiden Bauteile gebildet. Das Gesperre ist beispielsweise ein, insbesondere integraler, Bestandteil eines der beiden Bauteile oder beider Bauteile. Das gesamte Gesperre ist beispielsweise einteilig und/oder einstückig mit einem der beiden Bauteile ausgebildet oder alle Bestandteile des Gesperres sind ausschließlich auf die beiden Bauteile aufgeteilt, wobei der jeweilige Bestandteil dann beispielsweise einteilig und/oder einstückig mit dem jeweiligen Bauteil ausgebildet ist. Beispielsweise weisen beide Bauteile jeweils einen Bestandteil des Gesperres auf, insbesondere als einen einteiligen und/oder einstückigen Teil des jeweiligen Bauteils.

Weiterhin ist es möglich, dass das Gesperre aus einem elastischen und/oder einem flexiblen Material gebildet ist oder dieses umfasst. In einer möglichen Ausführungsform ist das Gesperre als mindestens ein Schwenkelement, insbesondere als eine Schwenklasche oder -tür ausgebildet. Durch ein solches Schwenkelement, wie eine Schwenklasche oder Schwenktür, ist ein Montieren oder Zusammensetzen der Bauteile auf einfache Art und Weise möglich. Es kann bei einem solchen Gesperre eine reversible Entsperrung durchgeführt werden, ohne dass das Gesperre beschädigt wird. Dadurch ist ein mehrmaliger Gebrauch der Verschlussanordnung möglich.

Ebenso ist es möglich, dass das Gesperre aus jeweils einem blockierenden Element in jedem der Bauteile besteht. Das Gesperre kann als ein in mindestens eines der beiden Bauteile integriertes Teil ausgebildet sein, welches ein Öffnen des Verschlusses entlang von Kontaktflächen von mindestens zwei Verschlussflächen des Verschlusses voneinander sperrt. Es kann jedoch auch als ein zusätzliches Teil ausgebildet sein. Blockierende Elemente können zum Beispiel sein: Schwenktüren, insbesondere eine scharnierlose Schwenktür,-arm oder -knopf.

Schwenktüren können dabei beispielsweise halb so lang ausgebildet sein, wie ein Öffnungsspielraum zwischen Verschlussflächen von Verschlüssen. Es sind jedoch auch kleinere Längen möglich.

Ebenso stellt bei einem solchen elastischen und/oder flexiblen Gesperre der voneinander getrennten Bauteile das Gesperre sich nach dem Öffnen des Verschlusses und einem Trennen der Bauteile in einen entspannten Zustand zurück und steht somit automatisch für einen weiteren Montagevorgang zur Verfügung.

In einer alternativen Ausführungsform ist es möglich, dass das Gesperre nicht elastisch ausgebildet ist. In einer solchen Ausführungsform kann das Gesperre sich nach dem Öffnen des Verschlusses und Trennen der Bauteile beispielsweise durch den Gebrauch einer Feder, insbesondere einer Rückstellfeder, in eine vorgespannte Ausgangslage zurück gestellt werden und steht somit automatisch für einen weiteren Montagevorgang zur Verfügung.

In einer Ausführungsform ist es möglich, dass das Gesperre frei von dem mindestens einen Bauteil absteht und mit einer freistehenden Stirnseite den Verschluss in einem geschlossenen Zustand sperrt. Durch die Integration des Gesperres in mindestens ein Bauteil wird die Zahl der Bauteile verringert. Durch das Sperren des Gesperres mittels der freistehenden Stirnseite wird eine einfache Entsperrung gefördert.

In einer alternativen Ausführungsform kann das Gesperre als mindestens ein Druckknopf ausgebildet sein. Auch in dieser Ausführungsform kann eine Entsperrung durchgeführt werden, ohne, dass das Gesperre beschädigt wird, wodurch es zu einem mehrmaligen Gebrauch genutzt werden kann.

In einer möglichen Ausführungsform bei einem Öffnen des Verschlusses durch eine rotatorische Bewegung ist es denkbar, dass der Verschluss als Bajonettverschluss ausgebildet ist. Dieser Verschluss bietet aufgrund eines Formschlusses im geschlossenen Zustand eine sehr große Verschlusskraft. Ein weiterer Vorteil des Bajonettverschlusses ist beispielsweise eine einfache und günstige Herstellbarkeit.

In einer weiteren Ausführungsform ist es möglich, dass beispielsweise bei Bauteilen, welche eine quaderförmige Form aufweisen, der Verschluss als ein Bajonettverschluss ausgebildet ist. Bei einem solchen Bajonettverschluss wäre es möglich, ein Öffnen des Verschlusses durch eine translatorische Bewegung auszuführen.

Es ist ebenso möglich, dass der Verschluss als ein Rastverschluss ausgebildet ist. Durch diese Art des Verschlusses wird ein einfach herstellbares Formgehemme mit einer hohen Verschlusskraft ermöglicht.

Vorteilhafterweise umfasst der Rastverschluss mindestens ein Rastelement. Das Rastelement kann dabei als mindestens ein Rasthaken ausgebildet sein. Dieser mindestens eine Rasthaken ist dabei auf mindestens einer von mindestens zwei Verschlussflächen des Verschlusses angeordnet. Es ist möglich, dass der mindestens eine Rasthaken mit einer Aussparung auf der weiteren Verschlussfläche des Verschlusses in Paarung gebracht werden kann.

Ebenso ist es denkbar, dass mindestens ein weiteres Rastelement, welches als Rasthaken ausgebildet ist, auf der weiteren der mindestens zwei Verschlussflächen des Verschlusses angeordnet ist und mit dem Rasthaken der einen Verschlussfläche, beispielsweise durch ein Übereinandergleiten, in Paarung gebracht werden kann. Ein Zurückgleiten kann beispielsweise durch Hinterschnitte der Rasthaken erschwert und/oder gehemmt werden.

Die Rastelemente können beispielsweise auch als eine Anreihung von Schnapphaken ausgebildet sein, welche einen Abstand zwischen den einzelnen Schnapphaken aufweisen. Ebenso kann zwischen einzelnen Rastelementen ein zusätzlicher Abstand ausgebildet sein, um mittels des Abstandes die Rasttiefe weiter zu verändern.

In einer möglichen Ausführungsform kann das Rastelement als Widerhaken ausgebildet sein. Rastelemente, welche als Widerhaken ausgebildet sind, erreichen bei Zugbelastung an dem Rastverschluss eine höhere Verschlusskraft als herkömmliche Rasthaken.

Es ist möglich, eine Rückstellfeder zwischen den beiden Bauteilen anzuordnen, welche die beiden Bauteile in Verschlussrichtung vorspannt. Dadurch können die beiden Bauteile dauerhaft miteinander verbunden werden.

In einer alternativen Ausführungsform kann der Rastverschluss als ein flexibler und/oder ein elastischer Rastverschluss, beispielsweise als Rastung, insbesondere mit einer oder mehreren Raststufen, ausgebildet sein. Dadurch ist es möglich, dass der Rastverschluss einfach und schnell geöffnet oder geschlossen werden kann.

Zudem weist ein solcher Rastverschluss auch eine hinreichend große Verschlusskraft auf und wird bei höheren Belastungen nicht zerstört, wie beispielsweise durch ein Abbrechen von aus dem Stand der Technik bekannten Rastelementen. Auch wird dadurch eine Montage durch ein übereinander Gleiten von Verschlussflächen des Verschlusses in mindestens eine Verschlussrichtung ermöglicht.

Mittels eines solchen flexiblen und/oder elastischen Rastverschlusses ist es auch möglich, dass die Verschlussflächen des Verschlusses um eine Höhe der Schnapphaken aufgebogen werden können, damit beide entgegengesetzt laufenden Rasthaken übereinander bewegt werden können.

Ebenso sind weitere Ausführungsformen für die Rastelemente, wie beispielsweise eine Nase und/oder ein Vorsprung möglich. Es ist denkbar, dass der Rastverschluss eine Vielzahl von Rastelementen umfasst. Der Vorteil der Rastelemente ist beispielsweise die einfache und günstige Herstellbarkeit. Ebenso kann durch eine größere Anzahl von Rastelementen und/oder Rastungen eine Erhöhung der Verschlusskraft ermöglicht werden.

Ebenso wie die Anzahl der Rastelemente kann auch eine Breite, eine Höhe und/oder eine Tiefe der Rasthaken angepasst werden. Die Anzahl und eine Schrittweite der Rastelemente definieren einen Halt und die Rasttiefe. Der Halt steigt mit der Rasttiefe bei gleicher Breite der Rastelemente. Auch eine Veränderung der Rauheit der Oberfläche, beispielsweise durch Anrauen, ist möglich.

Es ist mit dem Rastverschluss auch möglich, die Rasttiefe der zu verbindenden Bauteile zueinander anzupassen. Hierdurch können beispielsweise Bauteile, wie Gehäuse, mit variabler Rasttiefe miteinander verbunden werden. So ist es für einen Nutzer beispielsweise möglich, die Rasttiefe des Gehäuses an die Größe von Gegenständen anzupassen, welche innerhalb des Gehäuses gelagert werden können. Dies ist beispielsweise bei einer Nutzung des Gehäuses vorteilhaft, bei welcher je nach Anwendung unterschiedlich große Gegenstände wie Batterien im Gehäuse gelagert werden.

In einer möglichen Ausführungsform umfasst mindestens eine Verschlussfläche des Verschlusses eine Anzahl von Rastelementen, und mindestens eine weitere Verschlussfläche des Verschlusses umfasst eine zweite Anzahl von Rastelementen, wobei die Anzahl der Rastelemente der verschiedenen Verschlussflächen voneinander verschieden ist und beispielsweise größer oder gleich 1 ist. Mittels einer solchen Verschlussfläche ist es möglich, dass bei einer unterschiedlichen Rasttiefe des Rastverschlusses eine gleichbleibende Verschlusskraft erzeugt wird.

Bei einer V-förmigen Anordnung der Rastelemente kann darüber hinaus eine unabhängig von der Rasttiefe konstante Verschlusskraft ermöglicht werden. Es ist daher denkbar, dass mehrere Rastelemente V-förmig zueinander angeordnet sind. Ein Rastverschluss mit mehreren Rastelementen ermöglicht darüber hinaus, die zu verbindenden Bauteile mit flexibler Rasttiefe zueinander zu positionieren. Ein weiterer Vorteil der V-förmigen Anordnung der Rastelemente ist die Verwendung von mindestens zwei identischen, verbindbaren Verschlussflächen bei gleichzeitig konstanter Verschlusskraft des Verschlusses, unabhängig von der Rasttiefe der Bauteile zueinander.

In einer weiteren Ausführungsform können auf mindestens einer ersten Verschlussfläche befindliche Rastelemente und auf mindestens einer zweiten Verschlussfläche befindliche Rastelemente jeweils V-förmig angeordnet sein.

Es ist möglich, dass die V-förmige Anordnung der Rastelemente jeweils zwei Schenkel umfasst, wobei jeder der Schenkel eine Reihe aufeinander folgender Rastelemente umfasst. Ein Schenkel ist dabei jeweils eine der beiden sich voneinander entfernenden Linien der V-förmigen Anordnung.

Darüber hinaus ist es möglich, dass die V-förmige Anordnung der Rastelemente auf der ersten Verschlussfläche mit einem Verbindungspunkt des V in eine Richtung und die V-förmige Anordnung der Rastelemente auf der zweiten Verschlussfläche mit einem Verbindungspunkt des V in eine entgegengesetzte Richtung weist. Hierdurch ist es möglich, dass die Bauteile identisch geformt sind. Somit können Kosten bei der Produktion der Bauteile gespart werden.

Ebenso ist es möglich, dass bei beiden Verschlussflächen zwischen jeweils zwei Rastelementen an dem Verbindungspunkt der Schenkel der V-förmigen Anordnung ein freier Raum ausgebildet ist.

In einer möglichen Weiterbildung ist zwischen den dem Verbindungspunkt der Schenkel benachbarten Rastelementen ein freier Raum vorgesehen. Die Rastelemente sind, insbesondere ab einer zweiten Reihe, dabei um jeweils mindestens eine halbe Breite eines Rastelementes gegenüber den Rastelementen am Verbindungspunkt der Schenkel nach außen versetzt. Dabei ist zwischen den nachfolgenden Rastelementen ebenfalls ein freier Raum vorgesehen, wobei diese Rastelemente jeweils mindestens eine halbe Breite eines Rastelements gegenüber den in Richtung des Verbindungspunts vorhergehenden Rastelementen nach außen versetzt sind. Durch diese Anordnung der Rastelemente ist es möglich, dass bei einer unterschiedlichen Rasttiefe des Rastverschlusses eine annährend gleichbleibende Verschlusskraft erzeugt wird. Ferner ist es in dieser Ausführungsform möglich, dass die Verschlussflächen identisch ausgebildet sind.

Darüber hinaus ist es möglich, dass der freie Raum zwischen den Rastelementen so ausgebildet ist, dass nur einander entsprechende Rastelemente auf den gegenüberliegenden Verschlussflächen miteinander in eine Wirkverbindung eingehen können.

Ausführungsbeispiele der Erfindung werden im Folgenden anhand von Zeichnungen näher erläutert.

Darin zeigen:
- Figur 1: schematisch zwei Bauteile mit einer möglichen Ausführungsform einer Verschlussanordnung in einem getrennten Zustand der Bauteile,
- Figur 2: schematisch zwei Bauteile mit einer zylindrischen Ausführungsform einer Verschlussanordnung nach Figur 1 in einem verbundenen Zustand der Bauteile,
- Figur 3: schematisch zwei Bauteile nach Figur 2 aus anderer Perspektive,
- Figur 4: schematisch eine mögliche Ausführungsform eines als Rastverschluss ausgebildeten Verschlusses,
- Figur 5A: schematisch zwei Bauteile nach Figur 1 mit einem Bajonettverschluss als Verschluss in einem geöffneten Zustand eines Verschlusses,
- Figur 5B: schematisch zwei Bauteile nach Figur 1 mit einem Bajonettverschluss als Verschluss in einem geöffneten Zustand des Verschlusses,
- Figur 5C: schematisch zwei Bauteile nach Figur 1 mit einem Bajonettverschluss als Verschluss in einem geschlossenen Zustand des Verschlusses,
- Figur 5D: schematisch zwei Bauteile nach Figur 1 mit einem Bajonettverschluss als Verschluss in einem geschlossenen Zustand des Verschlusses,
- Figur 6: schematisch zwei Bauteile einer möglichen quaderförmigen Ausführungsform einer Verschlussanordnung mit translatorischen Formgehemme oder Formschluss im geschlossenen Zustand eines Verschlusses,
- Figur 7: schematisch eine mögliche Ausführungsform eines mit Widerhaken als Rastverschluss ausgebildeten Verschlusses,
- Figur 8: schematisch eine weitere Ausführungsform eines als Rastverschluss ausgebildeten Verschlusses mit unterschiedlich ausgebildeten Verschlussflächen,
- Figur 9A: schematisch eine weitere Ausführungsform eines als Rastverschluss ausgebildeten Verschlusses mit V-förmig angeordneten Rastelementen zweier identisch ausgebildeten Verschlussflächen, und
- Figur 9B: schematisch eine weitere Ausführungsform eines als Rastverschluss ausgebildeten Verschlusses mit V-förmig angeordneten Rastelementen zweier identisch ausgebildeten Verschlussflächen.

Einander entsprechende Teile sind in allen Figuren mit den gleichen Bezugszeichen versehen.

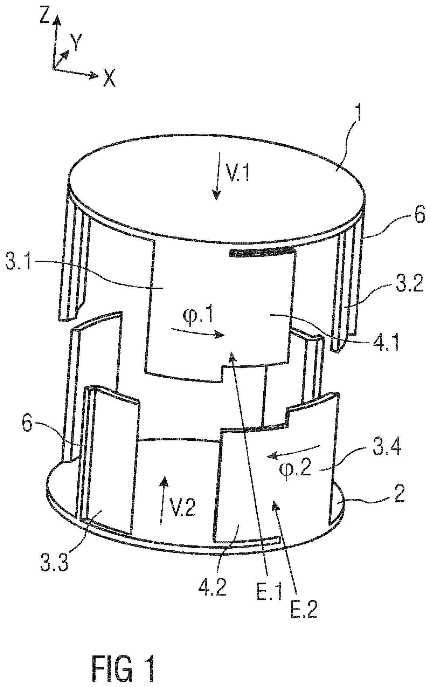

**Figur 1** zeigt zwei Bauteile 1, 2 mit einer möglichen Ausführungsform einer Verschlussanordnung in geöffnetem Zustand. Die Bauteile 1, 2 können formgleich ausgebildet sein. Ein erstes Bauteil 1 umfasst eine erste Verschlussfläche 3.1 und eine zweite Verschlussfläche 3.2. Ein zweites Bauteil 2 umfasst eine dritte Verschlussfläche 3.3 und eine vierte Verschlussfläche 3.4. Die erste Verschlussfläche 3.1 und die dritte Verschlussfläche 3.3, sowie die zweite Verschlussfläche 3.2 und die vierte Verschlussfläche 3.4 bilden jeweils einen Verschluss 3.

Ein Gesperre 4 ist zwischen den Verschlussflächen 3.1 bis 3.4 angeordnet. Dabei umfasst das Gesperre 4 eine erste Schwenktür 4.1 und eine zweite Schwenktür 4.2, wobei die erste Schwenktür 4.1 an der ersten Verschlussfläche 3.1 vom ersten Bauteil 1 und die zweite Schwenktür 4.2 an der vierten Verschlussfläche 3.4 vom zweiten Bauteil 2 angeordnet ist. Die beiden Schwenktüren 4.1, 4.2 sind dabei halb so lang ausgebildet, wie ein Öffnungsspielraum zwischen den Verschlussflächen 3.1, 3.2, 3.3, 3.4. Es sind jedoch auch kleinere Längen möglich. Ebenfalls wäre es bei einer Ausführungsform mit nur einer Schwenktür 4.1 möglich, dass die Schwenktür 4.1 über die komplette Länge des Öffnungsspielraumes ausgebildet ist.

Darüber hinaus zentrieren sich die Bauteile 1, 2 zueinander, indem die Außenflächen von der zweiten Verschlussfläche 3.2 und der dritten Verschlussfläche 3.3 mit den Innenflächen der ersten Schwenktür 4.1 und der zweiten Schwenktür 4.2 ineinander gleiten. Eine freie Bewegung erfolgt als eine Rotation der Bauteile 1, 2 in Abhängigkeit zueinander.

Die Zentrierung der beiden Bauteile 1, 2 zueinander kann auch durch zusätzliche Konturen, wie beispielsweise Zentrierdome, realisiert werden.

An der zweiten Verschlussfläche 3.2 und der dritten Verschlussfläche 3.3 ist darüber hinaus jeweils ein Anschlag 6 ausgebildet. Im verbundenen Zustand der Bauteile 1, 2 greifen die gepaarten Verschlüsse 3 ineinander und bilden eine Verbindung. Der Anschlag 6 verhindert in geschlossenem Zustand des Verschlusses eine Bewegung des ersten Bauteils 1 entgegen einer Öffnungsrichtung ϕ.1 und eine Bewegung des zweiten Bauteils 2 entgegen einer Öffnungsrichtung ϕ.2, welche in den Figuren 1 bis 3, 5A und 5C beispielhaft als eine Winkelrichtung ausgebildet sind.

Die Anschläge 6 sperren die Rotation der Bauteile 1, 2 im verbundenen Zustand entgegen der jeweiligen Öffnungsrichtung ϕ.1 bzw. ϕ.2, so dass sich die beiden Bauteile 1, 2 nur noch in die jeweilige Öffnungsrichtung ϕ.1 bzw. ϕ.2 zueinander rotieren lassen. Da diese Drehrichtung durch das Gesperre 4 blockiert wird sind die beiden Bauteile 1 und 2 fest miteinander verbunden.

Es ist jedoch auch möglich, durch ein weiteres, nicht näher dargestelltes, einzuspannendes Objekt zwischen den Bauteilen 1, 2 die Rotation entgegen der jeweiligen Öffnungsrichtung ϕ.1 bzw. ϕ.2 zu verhindern. Ein solches einzuspannendes Objekt kann beispielsweise eine Plombe oder einen Stift sein, welches zwischen den Bauteilen 1, 2 einen Anschlag ausbildet. Dadurch können die Bauteile 1, 2 nur noch in die jeweilige Öffnungsrichtung ϕ.1 bzw. ϕ.2 zueinander rotiert werden.

Die erste Verschlussfläche 3.1 und die dritte Verschlussfläche 3.3, sowie die zweite Verschlussfläche 3.2 und die vierte Verschlussfläche 3.4 sind jeweils als eine in Fig. 1 nicht näher dargestellte Paarung ausgebildet und bilden zusammen einen Verschluss 3. Durch ein Ineinandergreifen der Verschlussflächen 3.1 bis 3.4 wird eine hohe Verschlusskraft an den Bauteilen 1, 2 erzeugt. Die Verschlusskraft wirkt beim ersten Bauteil 1 in eine Verschlussrichtung V.1; die Verschlusskraft beim zweiten Bauteil 2 wirkt in eine Verschlussrichtung V.2. Die Verschlusskraft wirkt dabei einer Kraft entgegen, welche aufgebracht werden muss, um die Bauteile 1, 2 durch Auseinanderziehen, beispielsweise durch Zerstörung, des Verschlusses 3, voneinander zu trennen. In Figur 1 verlaufen die Verschlussrichtungen V1, V.2 entlang einer Z-Achse. Eine Paarung kann beispielsweise durch einen Rastverschluss oder einen Bajonettverschluss erzeugt werden. Die Öffnungsrichtungen ϕ.1, ϕ.2 liegen senkrecht zu den Verschlussrichtungen V. 1, V.2.

Das Gesperre 4 umfasst die erste Schwenktür 4.1 und die zweite Schwenktür 4.2. Dabei ist das Gesperre 4 in einem Öffnungsraum zwischen den Verschlussflächen 3.1 und 3.2, sowie den Verschlussflächen 3.3 und 3.4 angeordnet. Die Schwenktüren 4.1 und 4.2 sind flexibel und/oder elastisch ausgebildet. Es besteht auch die Möglichkeit, dass nur eine der beiden Schwenktüren aus einem flexiblen und/oder elastischen Material ausgebildet ist, und die zweite Schwenktür aus einem steifen Material ausgebildet ist.

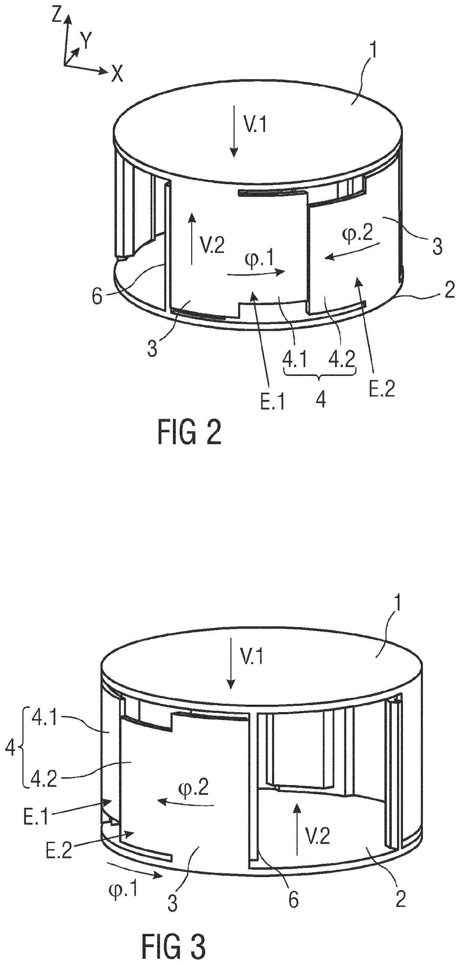

In der **Figur 2** **und der** **Figur 3** sind die beiden Bauteile 1, 2 in einer möglichen Ausführungsform der Verschlussanordnung nach Figur 1 im verbundenen Zustand der Bauteile 1, 2 dargestellt. Die Verschlussflächen 3.1 bis 3.4 bilden die Verschlüsse 3. Das Gesperre 4 ist in gesperrtem Zustand zwischen den beiden Verschlüssen 3 angeordnet.

Das Gesperre 4 sperrt die Bauteile 1, 2 im verbundenen Zustand und verhindert eine Bewegung mindestens eines Bauteiles 1 oder 2 in Öffnungsrichtung cp.1 oder ϕ.2. Die beiden Schwenktüren 4.1, 4.2 stoßen mit ihren freiliegenden Stirnflächen im gesperrten Zustand aufeinander und wirken durch gegenseitige Stauchung sperrend. In verbundenem Zustand der beiden Bauteile 1, 2 kann zwischen den Stirnflächen beispielsweise ein Luftraum ausgebildet sein.

Durch Krafteinwirkung in eine Entsperrungsrichtung E.1 der Schwenktüre 4.1 oder durch Krafteinwirkung in eine Entsperrungsrichtung E.2 der Schwenktüre 4.2 auf mindestens eine der beiden Schwenktüren 4.1, 4.2 ist eine Verformung einer der beiden Schwenktüren 4.1, 4.2 möglich. Dadurch kann die sperrende Wirkung des Gesperres 4 aufgehoben und die Bauteile 1, 2 zerstörungsfrei voneinander getrennt werden.

Es ist auch denkbar, dass das Gesperre 4 als ein zusätzliches Teil ausgebildet ist.

In einer alternativen Ausführungsform ist es möglich, durch Krafteinwirkung entgegen der Entsperrungsrichtung E.1 der Schwenktüre 4.1 oder durch Krafteinwirkung entgegen der Entsperrungsrichtung E.2 der Schwenktüre 4.2 auf mindestens eine der beiden Schwenktüren 4.1, 4.2 eine Verformung einer der beiden Schwenktüren 4.1, 4.2 durchzuführen. Dadurch kann die sperrende Wirkung des Gesperres 4 durch eine ziehende Bewegung aufgehoben und die Bauteile 1, 2 zerstörungsfrei voneinander getrennt werden.

Die Entsperrungsrichtungen E.1 bzw. E.2 verlaufen dabei senkrecht zu den Verschlussrichtungen V.1 bzw. V.2 und zu den Öffnungsrichtungen cp.1 bzw. ϕ2.

Darüber hinaus bezeichnen in den Figuren 1 bis 3, sowie 5A bis 5C die Entsperrungsrichtungen E.1, E.2 eine Wirkrichtung von jedem Punkt einer Mantelfläche einer Schwenktüre 4.1, 4.2 ausgehend und verlaufen zu den Mittelachsen der in den Figuren 1 bis 3 zylindrischen ausgebildeten Bauteile 1 und 2.

Die Bauteile 1, 2 der Figur 1 können in den in Figur 2 dargestellten Zustand überführt werden. Dabei kann der Verschluss 3 beispielsweise als flexibler und/oder elastischer Rastverschluss ausgebildet sein. Es ist möglich, die Bauteile 1, 2 durch eine Krafteinwirkung der Bauteile 1, 2 entlang der Verschlussrichtung V.1 und/oder V.2 miteinander zu verbinden. Die Verschlussflächen 3.1 und 3.3, sowie die Verschlussflächen 3.2 und 3.4 sind dabei übereinander angeordnet und zueinander zentriert. Durch diese Bewegung kommt es zu einer formschlüssigen Verbindung der Verschlussflächen 3.1 bis 3.4. Die Anschläge 6 verhindern die Rotation entgegen den jeweiligen Wirkrichtungen. Darüber hinaus stoßen die Schwenktüren 4.1 und 4.2 im verbundenen Zustand der Bauteile 1, 2 mit ihrer freiliegenden Stirnfläche in gesperrtem Zustand aufeinander. Die Schwenktüren 4.1 und 4.2 wirken durch gegenseitige Stauchung sperrend.

Ebenso ist es möglich, dass bei einem starren Rastverschluss die Bauteile 1, 2 derart aneinander gelagert sind, dass sich die Schwenktüren 4.1 und 4.2 überlappen. Dabei kann beispielsweise die Schwenktür 4.1 in die Entsperrungsrichtung E.1 und hinter die Schwenktür 4.2 vorgespannt sein. Eine Zentrierung für die Bauteile 1, 2 erfolgt durch zentrischen Oberflächen. Durch eine rotatorische Bewegung der Bauteile 1, 2 gegeneinander entgegen der jeweiligen Öffnungsrichtung ϕ.1 bzw. ϕ.2 können die Schwenktüren 4.1 und 4.2 aneinander vorbei gleiten und die Verschlussflächen 3.1 bis 3.4 werden übereinander bewegt. Durch diese Bewegung kommt es zu einer formschlüssigen Verbindung der Verschlussflächen 3.1 bis 3.4, beispielsweise das Ineinandergreifen von Rasthaken des Rastverschlusses. Ist der verbundene Zustand erreicht wird ein weiteres Ausführen der Bewegung entgegen der jeweiligen Öffnungsrichtung ϕ.1 bzw. ϕ.2 durch die Anschläge 6 verhindert. Darüber hinaus überlappen sich die Schwenktüren 4.1 und 4.2 im verbundenen Zustand der Bauteile 1, 2 nicht mehr. Dadurch wird die Schwenktür 4.1 im verbundenen Zustand der Bauteile 1, 2 aus dem vorgespannten Zustand in einen entspannten Zustand der Schwenktür 4.1, und somit in einen gesperrten Zustand des Gesperres 4 überführt und die Schwenktüren 4.1 und 4.2 stoßen mit ihrer freiliegenden Stirnfläche in gesperrtem Zustand aufeinander. Die Schwenktüren 4.1 und 4.2 wirken auch in diesem Ausführungsbeispiel durch gegenseitige Stauchung sperrend. Darüber hinaus sperren die Schwenktüren 4.1 und 4.2 nicht nur ein Öffnen des Verschlusses 3 im geschlossenen Zustand des Verschlusses 3, sondern ebenso ein Verschließen des Verschlusses 3 im geöffneten Zustand des Verschlusses 3.

Um die Bauteile 1, 2 erneut von dem in Figur 2 dargestellten Zustand in den in Figur 1 dargestellten Zustand zu überführen, muss zunächst eine Krafteinwirkung in die Entsperrungsrichtung E.1 und/oder E.2 auf mindestens eine der beiden Schwenktüren 4.1, 4.2 ausgeübt werden. Durch die Krafteinwirkung in Entsperrungsrichtung E.1 auf die Schwenktür 4.1 ist es möglich, die Schwenktür 4.1 geringfügig zu verbiegen, wodurch die Schwenktür 4.1 mittels einer rotatorischen Bewegung in die Öffnungsrichtung ϕ.1 hinter die Schwenktür 4.2 geführt werden kann. Dadurch werden die Verschlussflächen 3.1 bis 3.4 aus einer Wirkverbindung bewegt, wodurch die Bauteile 1, 2 voneinander getrennt werden können.

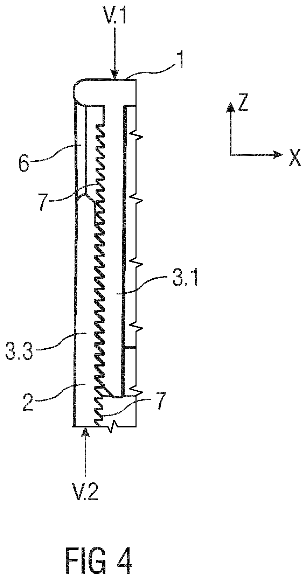

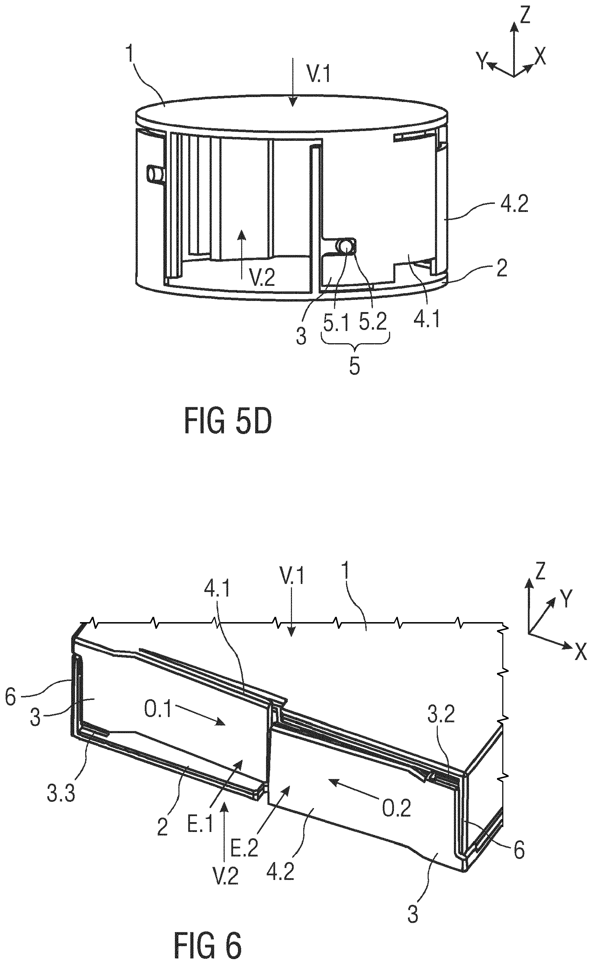

In **Figur 4** ist eine mögliche Ausführungsform eines Verschlusses 3 dargestellt. Der Verschluss 3 ist dabei als ein Formgehemme, insbesondere als ein Rastverschluss aus einer Vielzahl von Rastelementen 7, insbesondere Rasthaken ausgebildet. Diese Ausführungsform kann beispielsweise sowohl in der in Figur 1 dargestellten Variante, als auch in der in Figur 6 dargestellten Variante angewendet werden. Die Rastelemente 7 bilden dabei an der Verschlussfläche 3.1 und der gegenüberliegenden Verschlussfläche 3.3 eine rastende Verbindung. Der Anschlag 6 von Bauteil 1 ist dabei in Figur 4 in Blickrichtung hinter dem Verschluss 3 angeordnet. Mindestens eine der Verschlussflächen 3.1, 3.2 und/oder mindestens eines der Rastelemente 7 des Rastverschlusses sind beispielsweise elastisch und/oder flexibel konzipiert, sodass die Rastelemente 7 des Verschlusses 3 der zu verbindenden Bauteile übereinander gleiten können. Ein Zurückgleiten wird beispielsweise durch einen Hinterschnitt der Rastelemente 7 erschwert und/oder gehemmt.

Durch die Rastelemente 7 wird beispielsweise eine starke Wirkverbindung in die Verschlussrichtungen V.1 und V.2 erzeugt. Die Paarung der Rastelemente 7 der Verschlussfläche 3.1 und der Rastelemente 7 der Verschlussfläche 3.3 kann mittels einer beliebigen Anzahl an Rastelementen 7 erzeugt werden. Es ist auch denkbar, dass ein Abstand zwischen den einzelnen Rastelementen 7 einer Verschlussfläche 3.1, 3.3 beliebig ist.

Ebenso kann auch eine Breite, eine Höhe und/oder eine Tiefe der Rastelemente 7, sowie deren Oberflächenrauheit, beliebig angepasst werden.

Darüber hinaus ist es durch eine Vielzahl an Rastelementen 7 möglich, den Verschluss 3 in unterschiedlichen Rasttiefen entlang der Verschlussrichtungen V 1, 2 zu verschließen. In Figur 4 verlaufen die Verschlussrichtungen V.1, V.2 entlang der Z-Achse. Die Bauteile 1, 2 sind dadurch in einer beliebigen Rasttiefe in eine der beiden Verschlussrichtungen V.1, V.2 zueinander verbindbar.

Der Anschlag 6 verhindert eine weitere Bewegung über den verbundenen Zustand der Bauteile 1, 2 in Figur 4 in Blickrichtung.

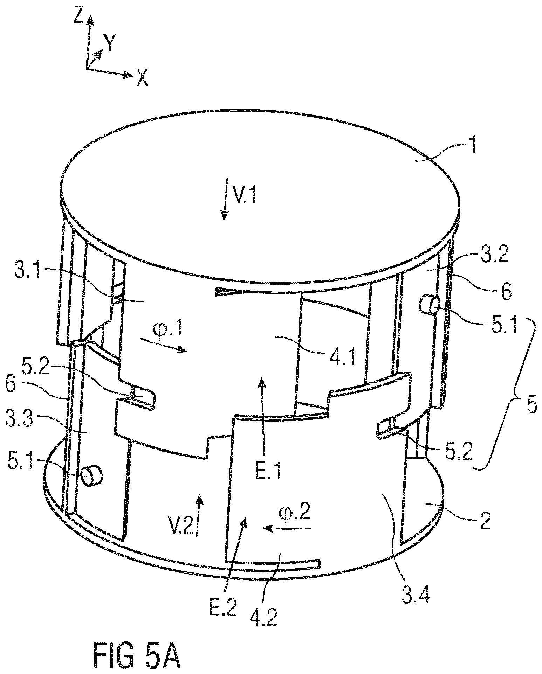

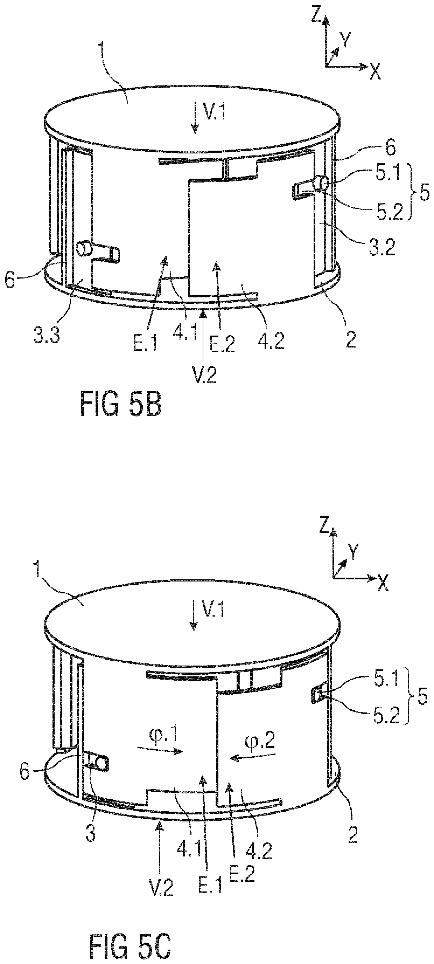

Die **Figuren 5A bis 5D** stellen schematisch die Bauteile 1, 2 nach Figur 2 dar, wobei der Verschluss 3 als ein Bajonettverschluss 5 ausgebildet ist. Dabei sind die Bauteile 1, 2 in den **Figuren 5A** **und** **5B** in geöffnetem Zustand des Verschlusses 3, und die **Figuren 5C** **und** **5D** in geschlossenem Zustand des Verschlusses dargestellt.

Der Bajonettverschluss 5 umfasst dabei beispielshaft mindestens einen Bajonettzylinder 5.1 und mindestens ein Bajonettlangloch 5.2. In den Figuren 5A bis 5D ist jeweils ein Bajonettzylinder 5.1 auf einer Verschlussfläche 3.2 und 3.3 angeordnet. Ebenso ist in den Figuren 5A bis 5D jeweils ein Bajonettlangloch 5.2 auf einer der Verschlussflächen 3.1, und 3.4 angeordnet. Es sind jedoch auch andere Ausführungsformen möglich, wobei die Verschlussflächen 3.1 und 3.4 eine Mehrzahl von Bajonettlanglöchern in unterschiedlichen Höhen umfassen. Ebenso ist eine Ausführungsform möglich, in welcher die Bajonettzylinder 5.1 auf den Verschlussflächen 3.1 und 3.4 angeordnet und die Bajonettlanglöcher 5.2 auf den Verschlussflächen 3.2 und 3.3 angeordnet sind.

In Figur 5A und 5B ist die Schwenktür 4.1 in die Entsperrungsrichtung E. 1 vorgespannt. Dies kann durch einen Nutzer erfolgen. Die Schwenktür 4.1 kann beispielsweise durch einen Nutzer und/oder durch die Schwenktür 4.2 in der in Entsperrungsrichtung E.1 vorgespannten Position gehalten werden. Eine Zentrierung für die Bauteile 1, 2 erfolgt durch zentrischen Oberflächen. Durch eine rotatorische Bewegung der Bauteile 1, 2 gegeneinander entgegen der jeweiligen Öffnungsrichtung ϕ.1 bzw. ϕ.2 können die Schwenktüren 4.1 und 4.2 aneinander vorbei gleiten und die Verschlussflächen 3.1 bis 3.4 werden übereinander bewegt. Durch diese Bewegung kommt es zu einer formschlüssigen Verbindung der Verschlussflächen 3.1 bis 3.4, wie sie in den Figuren 5C und 5D dargestellt ist. Dabei entsteht die formschlüssige Verbindung des Verschlusses 3, indem die Bajonettzylinder 5.1 in die Bajonettlanglöcher 5.2 bewegt werden.

Dadurch kann sich die Schwenktür 4.1 nach Abschluss der rotatorischen Bewegung der Bauteile 1, 2 wieder in einen entspannten Zustand, und die Verbindung wird somit wieder in einen gesperrten Zustand des Gesperres 4 überführt. Dabei stoßen die Schwenktüren 4.1 und 4.2 mit ihrer freiliegenden Stirnfläche in gesperrtem Zustand aufeinander. Die Schwenktüren 4.1 und 4.2 wirken in diesem Ausführungsbeispiel ebenfalls durch gegenseitige Stauchung sperrend. Darüber hinaus sperren die Schwenktüren 4.1 und 4.2 nicht nur das Öffnen des Verschlusses 3 im geschlossenen Zustand des Verschlusses 3, sondern ebenso das Verschließen des Verschlusses 3 im geöffneten Zustand des Verschlusses 3.

In **Figur 6** ist eine mögliche Ausführungsform einer Verschlussanordnung zwischen zwei quaderförmigen Bauteilen 1, 2 dargestellt. Die Verschlussanordnung ist in geschlossenem Zustand des Verschlusses 3 abgebildet. Das erste Bauteil 1 umfasst eine erste Schwenktür 4.1, sowie in Figur 6 sichtbar eine zweite Verschlussfläche 3.2 und einen an der zweiten Verschlussfläche 3.2 angeordneten Anschlag 6.

Darüber hinaus bildet das erste Bauteil 1 zusammen mit dem zweiten Bauteil 2 zwei als Formgehemme oder formschlüssig verbundene Verschlüsse 3 aus. Das zweite Bauteil 2 umfasst zusätzlich eine zweite Schwenktür 4.2, sowie in Figur 6 sichtbar eine dritte Verschlussfläche 3.3. An der dritten Verschlussfläche 3.3 ist ein Anschlag ausgebildet. Die Verschlussflächen 3.2 und 3.3, sowie die in Figur 6 nicht sichtbaren Verschlussflächen 3.1 und 3.4 sind jeweils aus einer Vielzahl aus Rastelementen 7 aufgebaut. Es sind jedoch auch andere Ausführungsformen des Verschlusses 3 denkbar.

Darüber hinaus sind die Verschlussrichtungen V.1 und V.2, eine Öffnungsrichtung O.1 für das erste Bauteil 1 und eine zweite Öffnungsrichtung 0.2 für das zweite Bauteil 2, welche in der Figur 6 beispielhaft als geradlinige Richtung ausgebildet sind, und welche senkrecht zur Verschlussrichtung V.1 und V.2 liegen, und die Entsperrungsrichtungen E.1 und E.2 gekennzeichnet. Die Richtungen stehen jeweils senkrecht zueinander. In Figur 6 verlaufen beispielhaft die Verschlussrichtungen V.1 und V.2 entlang einer Z-Achse, die Öffnungsrichtungen O.1 und O.2 entlang einer X-Achse und die Entsperrungsrichtung E.1 und E.2 entlang einer Y-Achse.

Die Verschlusskraft ist die Kraft, die der Verschluss 3 einem ungewollten Öffnen entgegensetzen kann, bevor er diesem Öffnen nachgibt, beispielsweise durch eine Zerstörung des Verschlusses 3. Dadurch haben die Verschlusskräfte die gleiche Orientierung wie die Verschlussrichtungen V.1 und V.2. Die Kräfte, die zum Überwinden der Verschlusskraft benötigt werden, zeigen in die entgegengesetzte Richtung zu den Verschlussrichtungen V.1 und V.2.

Wie in **Figur 1** **und** **2** verhindern die Anschläge 6 der Bauteile 1, 2 eine Bewegung über einen geschlossenen Zustand des Verschlusses entgegen der Öffnungsrichtungen O.1 oder O.2 eines Bauteils 1 oder 2. Ebenso sind die Schwenktüren 4.1, 4.2 zwischen den beiden Verschlüssen 3 angeordnet und stoßen mit ihrer freiliegenden Stirnfläche in gesperrtem Zustand aufeinander und wirken durch gegenseitige Stauchung sperrend.

In **Figur 6** ist es möglich, durch ein Entsperren des Gesperres 4 in Entsperrungsrichtung E.1, E.2 eine Wirkverbindung der Verschlussflächen 3.1 bis 3.4 der Verschlüsse 3 durch eine anschließende translatorische Bewegung der Bauteile 1 und 2 in Öffnungsrichtung O.1 und O.2 zu lösen. Das Gesperre 4 kann dabei beispielsweise wie in Figur 6 auf einer Seite der quaderförmigen Bauteile 1, 2 angeordnet sein. Es ist auch möglich, dass das Gesperre 4 auf zwei Seiten der quaderförmigen Bauteile 1, 2, insbesondere zwei gegenüberliegenden Seiten der quaderförmigen Bauteile 1, 2, angeordnet ist.

In einem solchen Ausführungsbeispiel kann der Verschluss 3 flexibel und/oder elastisch ausgebildet sein. Ebenso ist es möglich, dass der Verschluss 3 starr ausgebildet ist.

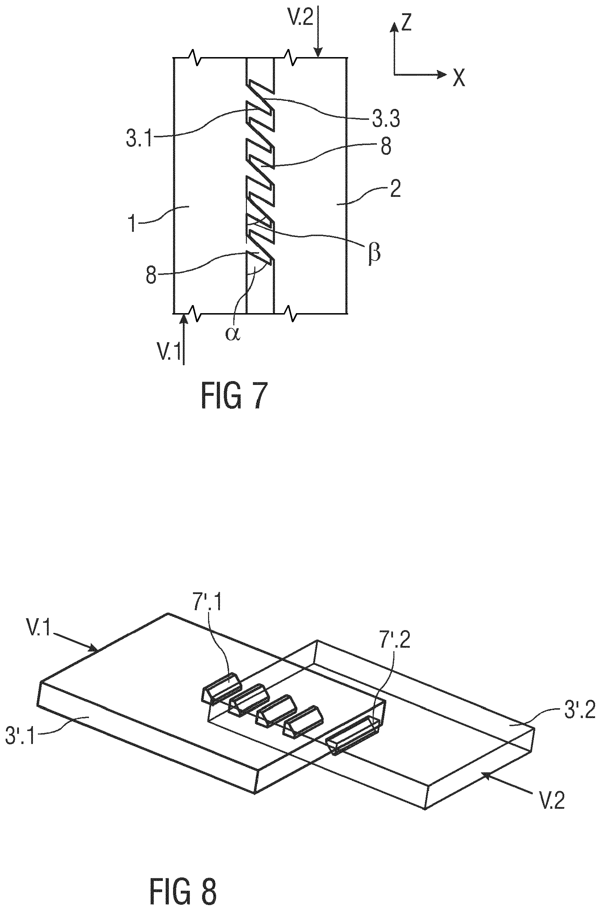

**Figur 7** zeigt eine mögliche Ausführungsform eines als Formgehemme verbundenen Verschlusses 3, wie er in den Figuren 1 bis 4 und 6 ausgebildet sein kann. Der Verschluss 3 ist dabei als ein Rastverschluss mit einer Vielzahl von Widerhaken 8 ausgebildet.

Die Widerhaken 8 können so ausgebildet sein, dass ein Winkel α und ein Winkel β in einer entgegen den Verschlussrichtungen V.1, V.2 verlaufenden Zugbelastungsrichtung, kleiner als 90° ausgebildet sind. Zusätzlich ist der Winkel α größer ausgebildet als der Winkel β. Durch die Widerhaken 8 entsteht eine höhere Verschlusskraft bei einer Zugbelastung, da die Widerhaken 8 ein Auseinandertreiben von Bauteil 1 und Bauteil 2 voneinander weg entlang der X-Achse erschweren. Dadurch wird das Öffnen in die Verschlussrichtungen V.1, V.2 durch die Widerhaken 8 erschwert. Damit der geneigte Hinterschnitt bei einer plötzlich wirkenden Öffnungskraft sicher wirkt, kann man zusätzlich mit einer Rückstellfeder dafür sorgen, dass die gepaarten Bauteile 1, 2 permanent in die Verschlussrichtung V.1, V.2 wirken. Damit wird erreicht, dass die Widerhaken 8 der Bauteile 1, 2 aneinander angelegt sind.

**Figur 8** zeigt eine mögliche Ausführungsform eines als Rastverschluss ausgebildeten Verschlusses 3. Der Verschluss 3 befindet sich dabei im geöffneten Zustand. Dabei sind auf einer ersten Verschlussfläche 3'.1 in der dargestellten Ausführungsform vier Rastelemente 7`.1 abgebildet. Denkbar ist jedoch auch, dass die Verschlussfläche 3`.1 eine andere Anzahl an Rastelementen 7`.1 umfasst. Auf einer zweiten Verschlussfläche 3`.2 ist ein einzelnes Rastelement 7'.2 angeordnet. Denkbar sind auch andere Ausführungsformen, wobei die Anzahl der Rastelemente 7`.1 einer ersten Verschlussfläche 3`.1 kleiner ist als die Anzahl der Rastelemente 7`.2 einer zweiten Verschlussfläche 3'.2.

Durch die in Figur 8 beschriebene Ausführungsform ist es möglich, dass ein Verschluss 3 in unterschiedlichen Rasttiefen geschlossen werden kann und dennoch eine konstante Verschlusskraft in eine Verschlussrichtung V. 1, V.2 aufweist. Die Verschlusskraft bei der ersten Verschlussfläche 3'.1 wird dabei in Verschlussrichtung V.1 erzeugt, die Verschlusskraft bei der zweiten Verschlussfläche 3'.2 wird dabei in eine Verschlussrichtung V.2 erzeugt. Dies ist unabhängig davon, welches der Rastelemente 7'.1 der Verschlussfläche 3'.1 mit dem Rastelement 7'.2 der Verschlussfläche 3'.2 in eine Überlappung gebracht wird. Es wird ein mit einem Kabelbinder vergleichbares Wirkungsprinzip im geschlossenen Zustand des Verschlusses 3 genutzt. Bei einem wie in Figur 4 dargestellten Verschluss verändert sich hingegen die Verschlusskraft bei einem geschlossenen Verschluss 3 in unterschiedlichen Rasttiefen. Die Verschlusskraft steigt mit jedem überlappenden Rastelement 7.

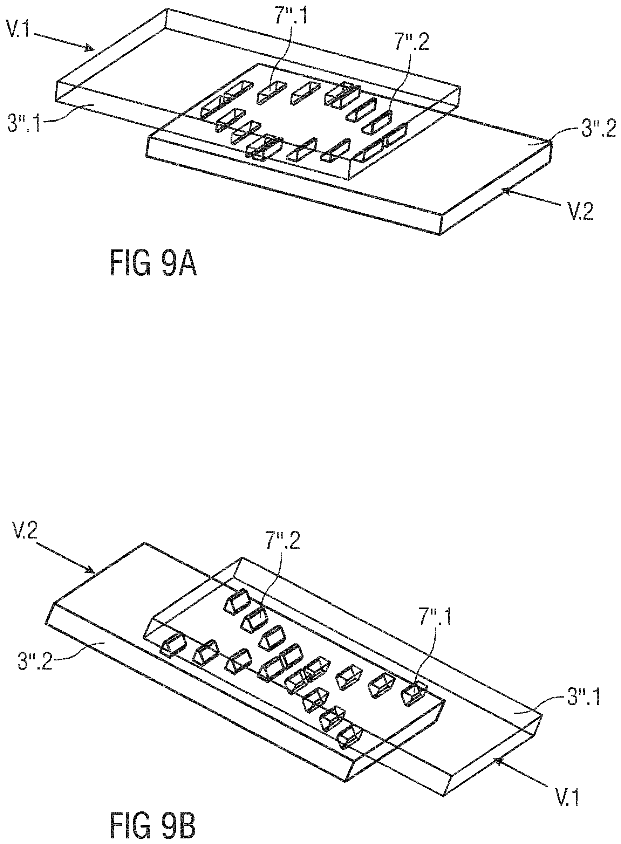

In den **Figuren 9A und 9B** ist eine weitere mögliche Ausführungsform eines als Rastverschluss ausgebildeten Verschlusses 3 dargestellt. Der Verschluss 3 befindet sich dabei in Figur 9A und 9B im geöffneten Zustand. Dabei sind auf einer ersten Verschlussfläche 3".1 befindliche Rastelemente 7".1 und auf einer zweiten Verschlussfläche 3".2 befindliche Rastelemente 7".2 in einer V-förmigen Anordnung umfassend zwei Schenkel angeordnet, derart dass jeder Schenkel eine Reihe aufeinander folgender Rastelemente umfasst. Die V-förmige Anordnung der Rastelemente 7".1 auf einer der Verschlussflächen 3".1 weist dabei mit dem Verbindungspunkt des V in eine Richtung und die V-förmige Anordnung der Rastelemente 7".2 auf der anderen Verschlussfläche 3".2 weist mit dem Verbindungspunkt des V in eine entgegengesetzte Richtung. Bei der Figur 9A verlaufen die Verschlussrichtungen V. 1, V.2 der beiden Verschlussflächen 3".1 und 3".2 entgegen dem Verbindungspunkt der V-förmigen Anordnung. Bei der Figur 9B verlaufen die Verschlussrichtungen V.1, V.2 der beiden Verschlussflächen 3".1 und 3".2 entlang dem Verbindungspunkt der V-förmigen Anordnung.

Dabei ist bei der ersten Verschlussfläche 3".1 zwischen den Rastelementen 7".1 und bei der zweiten Verschlussfläche 3".2 zwischen den Rastelementen 7".2 am Verbindungspunkt der Schenkel ein freier Raum ausgebildet. Der freie Raum weist dabei beispielsweise eine Breite von 1 mm auf. Es sind jedoch auch größere Breiten möglich. Ebenso sind Ausführungsformen möglich, bei welchen der freie Raum eine kleinere Breite aufweist.

Zwischen den dem Verbindungspunkt der Schenkel benachbarten Rastelementen 7".1, 7".2, welche beispielsweise in einer zweiter Reihe angeordnet sind, ist ein freier Raum vorgesehen, wobei die Rastelemente 7".1, 7"2, insbesondere in der zweiten Reihe, jeweils mindestens eine halbe Breite der Rastelemente 7".1, 7".2 gegenüber den vorhergehenden Rastelementen 7".1, 7".2, beispielsweise an dem Verbindungspunkt der Schenkel, nach außen versetzt sind.

Zwischen den nachfolgenden Rastelementen 7".1, 7".2 ist ebenfalls ein freier Raum vorgesehen, wobei die nachfolgenden Rastelemente 7".1, 7".2 jeweils mindestens eine halbe Breite der Rastelemente 7".1, 7".2 gegenüber den vorhergehenden Rastelementen 7".1, 7".2 nach außen versetzt sind. Es ist jedoch auch möglich, dass die nachfolgenden Rastelemente mehr als die halbe Breite der jeweils vorhergehenden Rastelemente nach außen versetzt sind.

Durch die V-förmige Anordnung der Rastelemente 7".1, 7".2 kann wie in Figur 8 eine annäherungsweise konstante Verschlusskraft in die Verschlussrichtungen V. 1 und V.2 des Verschlusses 3 wirken, da bei dieser Ausführungsform eine Wirkfläche der Rastelemente 7".1, 7".2, an welcher die Rastelemente 7". 1, 7".2 der gegenüberliegenden Verschlussflächen 3".1, 3".2 aneinander liegen, annährungsweise gleich groß ist.

In einer weiteren, nicht näher dargestellten Ausführungsform ist es möglich, dass die folgenden Rastelemente mehr als die halbe Breite der jeweils vorhergehenden Rastelemente 7".1, 7".2 nach außen versetzt sind.

### BEZUGSZEICHENLISTE

- 1: Bauteil
- 2: Bauteil
- 3: Verschluss
- 3.1: Verschlussfläche
- 3.2: Verschlussfläche
- 3.3: Verschlussfläche
- 3.4: Verschlussfläche
- 3'.1: Verschlussfläche
- 3' .2: Verschlussfläche
- 3".1: Verschlussfläche
- 3".2: Verschlussfläche
- 4: Gesperre
- 4.1: Schwenktür
- 4.2: Schwenktür
- 5: Bajonettverschluss
- 5.1: Bajonettzylinder
- 5.2: Bajonettlangloch
- 6: Anschlag
- 7: Rastelement
- 7`.1: Rastelement
- 7`.2: Rastelement
- 7".1: Rastelement
- 7".2: Rastelement
- 8: Widerhaken

- V.1: Verschlussrichtung
- V.2: Verschlussrichtung
- O.1: Öffnungsrichtung in quaderförmigen Anordnungen
- O.2: Öffnungsrichtung in quaderförmigen Anordnungen
- ϕ.1: Öffnungsrichtung in zylindrischen Anordnungen
- ϕ.2: Öffnungsrichtung in zylindrischen Anordnungen
- E.1: Entsperrungsrichtung
- E.2: Entsperrungsrichtung

## Patentansprüche

1. Verschlussanordnung mit mindestens einem, insbesondere reversiblen, Verschluss (3) zwischen mindestens zwei zu verbindenden Bauteilen (1, 2), wobei die Bauteile (1, 2) mittels des mindestens einen Verschlusses (3) in mindestens eine Verschlussrichtung (V.1, V.2) miteinander durch Formgehemme und/oder durch Formschluss verbindbar sind, **dadurch gekennzeichnet, dass** der Verschluss (3) mittels mindestens eines Gesperres (4) gesichert ist, welches zwischen den Bauteilen (1, 2) zusätzlich vorgesehen ist und ein Öffnen des Verschlusses (3) sperrt.

2. Verschlussanordnung nach Anspruch 1, wobei das Gesperre (4) ausschließlich durch eines der beiden Bauteile (1, 2) oder ausschließlich durch die beiden Bauteile (1, 2) gebildet ist.

3. Verschlussanordnung nach Anspruch 1 oder 2, wobei der Verschluss (3) bei entsperrtem Gesperre (4) durch eine translatorische Bewegung mindestens eines der Bauteile (1, 2) in eine jeweilige Öffnungsrichtung (O.1; O.2) öffenbar ist, die senkrecht zur Verschlussrichtung (V.1, V.2) ist.

4. Verschlussanordnung nach Anspruch 1 oder 2, wobei der Verschluss (3) bei entsperrtem Gesperre (4) durch eine rotierende Bewegung mindestens eines der Bauteile (1, 2) in Öffnungsrichtung (cp.1, ϕ.2) öffenbar ist, die senkrecht zur Verschlussrichtung (V. 1, V.2) ist.

5. Verschlussanordnung nach einem der vorhergehenden Ansprüche, wobei der Verschluss (3) durch mindestens eine translatorische Bewegung und mindestens eine rotatorische Bewegung mindestens eines der Bauteile (1, 2) öffenbar ist.

6. Verschlussanordnung nach einem der Ansprüche 3 bis 5, wobei das Gesperre (4) zum Entsperren in eine Entsperrungsrichtung (E. 1, E.2) bewegbar ist, die senkrecht zur Verschlussrichtung (V.1, V.2) und zur Öffnungsrichtung (O.1, O.2, ϕ.1, ϕ.2) verläuft.

7. Verschlussanordnung nach einem der vorhergehenden Ansprüche, wobei das Gesperre (4) aus einem elastischen und/oder flexiblen Material gebildet ist und/oder mindestens ein Schwenkelement (4.1, 4.2), insbesondere eine Schwenklasche und/oder eine Schwenktüre, umfasst.

8. Verschlussanordnung nach einem der vorhergehenden Ansprüche, wobei das Gesperre (4) frei von dem mindestens einem Bauteil (1, 2) absteht und mit einer freistehenden Stirnseite den Verschluss (3) in einem geschlossenen Zustand sperrt.

9. Verschlussanordnung nach einem der vorhergehenden Ansprüche, wobei der Verschluss (3) als ein Bajonettverschluss (5) ausgebildet ist.

10. Verschlussanordnung nach einem der vorhergehenden Ansprüche, wobei der Verschluss (3) als ein Rastverschluss ausgebildet ist, welcher mindestens ein Rastelement (7, 7'.1, 7'.2, 7".1, 7".2, 8) umfasst.

11. Verschlussanordnung nach Anspruch 10, wobei der Rastverschluss als ein flexibler, elastischer Rastverschluss ausgebildet ist.

12. Verschlussanordnung nach Anspruch 10 oder 11, wobei mindestens eine Verschlussfläche (3.1, 3.2, 3.3, 3.4; 3'.1, 3'.2, 3".1, 3".2) des Verschlusses (3) eine Anzahl von Rastelementen (7, 7'.1, 7'.2, 7".1, 7".2, 8) umfasst, und mindestens eine weitere Verschlussfläche (3.2, 3.1, 3.4, 3.3; 3'.1, 3'.2; 3". 1, 3".2) des Verschlusses (3) eine zweite Anzahl von Rastelementen (7, 7'.1, 7'.2, 7".1, 7".2, 8) umfasst, wobei die Anzahl der Rastelemente (7, 7'.1, 7'.2, 7".1, 7".2, 8) der verschiedenen Verschlussflächen (3.2, 3.1, 3.4, 3.3; 3`.1, 3`.2; 3".1, 3".2) voneinander verschieden ist.

13. Verschlussanordnung nach einem der Ansprüche 10 bis 12, wobei auf mindestens einer ersten Verschlussfläche (3.1, 3.2, 3`.1, 3".1) befindliche Rastelemente (7, 7'.1, 7'.2, 7".1, 7".2, 8) und auf mindestens einer zweiten Verschlussfläche (3.3, 3.4, 3`.2, 3".2) befindliche Rastelemente (7, 7'.1, 7'.2, 7".1, 7".2, 8) jeweils V-förmig angeordnet sind.

14. Verschlussanordnung nach Anspruch 13, wobei bei beiden Verschlussflächen (3.1, 3.2, 3`.1, 3".1, 3.3, 3.4, 3`.2, 3".2) zwischen jeweils zwei Rastelementen (7, 7`.1, 7'.2, 7".1, 7".2, 8) an einem Verbindungspunkt der Schenkel der jeweiligen V-förmige Anordnung ein freier Raum ausgebildet ist, und wobei zwischen den dem Verbindungspunkt der Schenkel benachbarten Rastelementen (7, 7'.1, 7'.2, 7".1, 7".2, 8) ein freier Raum vorgesehen ist, wobei die Rastelemente (7, 7' .1, 7'.2, 7".1, 7".2, 8) um jeweils mindestens eine halbe Breite eines Rastelements (7, 7'.1, 7'.2, 7".1, 7".2, 8) gegenüber den Rastelementen (7, 7`.1, 7'.2, 7".1, 7".2, 8) des Verbindungspunktes nach außen versetzt sind, wobei zwischen den nachfolgenden Rastelementen (7, 7'.1, 7'.2, 7"`.1, 7".2, 8) ebenfalls ein freier Raum vorgesehen ist, wobei diese Rastelemente (7, 7'.1, 7'.2, 7".1, 7".2, 8) jeweils mindestens eine halbe Breite eines Rastelements (7, 7'.1, 7'.2, 7".1, 7".2, 8) gegenüber den in Richtung des Verbindungspunkts vorhergehenden Rastelementen (7, 7'.1, 7'.2, 7".1, 7".2, 8) nach außen versetzt sind.

15. Verschlussanordnung nach mindestens einem der vorhergehenden Ansprüche, wobei die mindestens zwei zu verbindenden Bauteile (1, 2) identisch ausgebildet sind.

## Claims

1. Closure arrangement having at least one, in particular reversible, closure (3) between at least two components (1, 2) to be connected, wherein, by means of the at least one closure (3), the components (1, 2) are connectable to one another in at least one closure direction (V.1, V.2) by way of form inhibition and/or form fitting, **characterized in that** the closure (3) is secured by means of at least one locking mechanism (4), which is additionally provided between the components (1, 2) and blocks opening of the closure (3).

2. Closure arrangement according to Claim 1, wherein the locking mechanism (4) is formed exclusively by one of the two components (1, 2) or exclusively by the two components (1, 2).

3. Closure arrangement according to Claim 1 or 2, wherein, with the locking mechanism (4) unlocked, the closure (3) is openable by a translational movement of at least one of the components (1, 2) in a respective opening direction (0.1, O.2), which is perpendicular to the closure direction (V.1, V.2).

4. Closure arrangement according to Claim 1 or 2, wherein, with the locking mechanism (4) unlocked, the closure (3) is openable by a rotational movement of at least one of the components (1, 2) in an opening direction (ϕ.1, ϕ.2), which is perpendicular to the closure direction (V.1, V.2).

5. Closure arrangement according to one of the preceding claims, wherein the closure (3) is openable by at least one translational movement and at least one rotational movement of at least one of the components (1, 2).

6. Closure arrangement according to one of Claims 3 to 5, wherein, for unlocking purposes, the locking mechanism (4) is movable in an unlocking direction (E.1, E.2) which is perpendicular to the closure direction (V. 1, V.2) and to the opening direction (0.1, O.2, ϕ.1, ϕ.2).

7. Closure arrangement according to one of the preceding claims, wherein the locking mechanism (4) is formed from an elastic and/or flexible material and/or comprises at least one swing element (4,1, 4.2), in particular a swing tab and/or a swing door.

8. Closure arrangement according to one of the preceding claims, wherein the locking mechanism (4) projects freely from the at least one component (1, 2) and, by way of an unattached face side, locks the closure (3) in a closed state.

9. Closure arrangement according to one of the preceding claims, wherein the closure (3) is in the form of a bayonet closure (5).

10. Closure arrangement according to one of the preceding claims, wherein the closure (3) is in the form of a latching closure which comprises at least one latching element (7, 7'.1, 7'.2, 7".1, 7".2, 8).

11. Closure arrangement according to Claim 10, wherein the latching closure is in the form of a flexible, elastic latching closure.

12. Closure arrangement according to Claim 10 or 11, wherein at least one closure surface (3.1, 3.2, 3.3, 3.4; 3'.1, 3'.2; 3".1, 3".2) of the closure (3) comprises a number of latching elements (7, 7'. 1, 7'.2, 7".1, 7".2, 8), and at least one further closure surface (3.2, 3.1, 3.4, 3.3; 3'.1, 3'.2; 3".1, 3".2) of the closure (3) comprises a second number of latching elements (7, 7'.1, 7'.2, 7".1, 7".2, 8), wherein the numbers of latching elements (7, 7'.1, 7'.2, 7".1, 7".2, 8) of the different closure surfaces (3.2, 3.1, 3.4, 3.3; 3'.1, 3'.2; 3".1, 3".2) are different.

13. Closure arrangement according to one of Claims 10 to 12, wherein latching elements (7, 7'.1, 7'.2, 7".1, 7".2, 8) situated on at least one first closure surface (3.1, 3.2, 3'. 1, 3".1) and latching elements (7, 7'. 1, 7'.2, 7".1, 7".2, 8) situated on at least one second closure surface (3.3, 3.4, 3'.2, 3".2) are in each case arranged in a V-shaped manner.

14. Closure arrangement according to Claim 13, wherein, in the case of both closure surfaces (3.1, 3.2, 3'.1, 3".1, 3.3, 3.4, 3'.2, 3".2), a free space is formed between in each case two latching elements (7, 7'.1, 7'.2, 7".1, 7".2, 8) at a connecting point of the legs of the respective V-shaped arrangement, and wherein a free space is provided between the latching elements (7, 7'. 1, 7'.2, 7".1, 7".2, 8) that are adjacent to the connecting point of the legs, wherein the latching elements (7, 7'.1, 7'.2, 7".1, 7".2, 8) are outwardly offset by in each case at least half a width of a latching element (7, 7'.1, 7'.2, 7".1, 7".2, 8) in relation to the latching elements (7, 7'.1, 7'.2, 7".1, 7".2, 8) at the connecting point, wherein a free space is likewise provided between the subsequent latching elements (7, 7'.1, 7'.2, 7".1, 7".2, 8), wherein these latching elements (7, 7'. 1, 7'.2, 7".1, 7".2, 8) are outwardly offset in each case at least half a width of a latching element (7, 7'. 1, 7'.2, 7". 1, 7".2, 8) in relation to the latching elements (7, 7'. 1, 7'.2, 7". 1, 7".2, 8) preceding them in the direction of the connecting point.

15. Closure arrangement according to at least one of the preceding claims, wherein the at least two components (1, 2) to be connected are of identical form.

## Revendications

1. Agencement de fermeture avec au moins une fermeture (3), notamment réversible, entre au moins deux composants (1, 2) à relier, les composants (1, 2) pouvant être reliés l'un à l'autre au moyen de l'au moins une fermeture (3) dans au moins une direction de fermeture (V.1, V.2) par blocage de forme et/ou par complémentarité de forme, **caractérisé en ce que** la fermeture (3) est sécurisée au moyen d'au moins un verrou (4) qui est prévu en supplément entre les composants (1, 2) et verrouille une ouverture de la fermeture (3).

2. Agencement de fermeture selon la revendication 1, dans lequel le verrou (4) est formé exclusivement par l'un des deux composants (1, 2) ou exclusivement par les deux composants (1, 2).

3. Agencement de fermeture selon la revendication 1 ou 2, dans lequel la fermeture (3), lorsque le verrou (4) est déverrouillé, peut être ouverte par un mouvement de translation d'au moins l'un des composants (1, 2) dans une direction d'ouverture respective (0.1 ; O.2) qui est perpendiculaire à la direction de fermeture (V.1, V.2).

4. Agencement de fermeture selon la revendication 1 ou 2, dans lequel la fermeture (3), lorsque le verrou (4) est déverrouillé, peut être ouverte par un mouvement de rotation d'au moins l'un des composants (1, 2) dans une direction d'ouverture (ϕ.1, ϕ.2) qui est perpendiculaire à la direction de fermeture (V.1, V.2).

5. Agencement de fermeture selon l'une quelconque des revendications précédentes, dans lequel la fermeture (3) peut être ouverte par au moins un mouvement de translation et au moins un mouvement de rotation d'au moins l'un des composants (1, 2).

6. Agencement de fermeture selon l'une quelconque des revendications 3 à 5, dans lequel le verrou (4) peut être déplacé pour le déverrouillage dans une direction de déverrouillage (E.1, E.2) qui est perpendiculaire à la direction de fermeture (V. 1, V.2) et à la direction d'ouverture (0.1, 0.2, ϕ.1, ϕ.2).

7. Agencement de fermeture selon l'une quelconque des revendications précédentes, dans lequel le verrou (4) est formé d'un matériau élastique et/ou flexible et/ou comprend au moins un élément pivotant (4.1, 4.2), notamment une patte pivotante et/ou une porte pivotante.

8. Agencement de fermeture selon l'une quelconque des revendications précédentes, dans lequel le verrou (4) s'étend librement à partir de l'au moins un composant (1, 2) et, avec un côté frontal libre, verrouille la fermeture (3) dans un état fermé.

9. Agencement de fermeture selon l'une quelconque des revendications précédentes, dans lequel la fermeture (3) est réalisée sous forme de fermeture à baïonnette (5).

10. Agencement de fermeture selon l'une quelconque des revendications précédentes, dans lequel la fermeture (3) est réalisée sous forme de fermeture à encliquetage qui comprend au moins un élément d'encliquetage (7, 7'.1, 7'.2, 7".1, 7".2, 8).

11. Agencement de fermeture selon la revendication 10, dans lequel la fermeture à encliquetage est réalisée sous forme de fermeture à encliquetage flexible, élastique.

12. Agencement de fermeture selon la revendication 10 ou 11, dans lequel au moins une surface de fermeture (3.1, 3.2, 3.3, 3.4 ; 3'.1, 3'.2 ; 3".1, 3".2) de la fermeture (3) comprend un nombre d'éléments d'encliquetage (7, 7'.1, 7'.2, 7".1, 7".2, 8), et au moins une autre surface de fermeture (3.2, 3.1, 3.4, 3.3 ; 3'.1, 3' .2 ; 3".1, 3".2) de la fermeture (3) comprend un deuxième nombre d'éléments d'encliquetage (7, 7'.1, 7'.2, 7".1, 7".2, 8), le nombre d'éléments d'encliquetage (7, 7'.1, 7' .2, 7".1, 7".2, 8) des différentes surfaces de fermeture (3.2, 3.1, 3.4, 3.3 ; 3'.1, 3'.2 ; 3".1, 3".2) étant différent les uns des autres.

13. Agencement de fermeture selon l'une quelconque des revendications 10 à 12, dans lequel des éléments d'encliquetage (7, 7'.1, 7'.2, 7".1, 7".2, 8) se trouvant sur au moins une première surface de fermeture (3.1, 3.2, 3'.1, 3".1) et des éléments d'encliquetage (7, 7'.1, 7'.2, 7".1, 7".2, 8) se trouvant sur au moins une deuxième surface de fermeture (3.3, 3.4, 3'.2, 3".2) sont agencés respectivement en forme de V.

14. Agencement de fermeture selon la revendication 13, dans lequel, pour les deux surfaces de fermeture (3.1, 3.2, 3'.1, 3".1, 3.3, 3.4, 3'.2, 3".2), entre deux éléments d'encliquetage (7, 7'.1, 7'.2, 7".1, 7".2, 8) respectif, un espace libre est formé à un point de liaison des branches de l'agencement respectif en forme de V, et un espace libre est prévu entre les éléments d'encliquetage (7, 7'.1, 7'.2, 7".1, 7".2, 8) voisins du point de liaison des branches, les éléments d'encliquetage (7, 7'.1, 7'.2, 7".1, 7".2, 8) étant respectivement décalés vers l'extérieur d'au moins une demi-largeur d'un élément d'encliquetage (7, 7'.1, 7'.2, 7".1, 7".2, 8) par rapport aux éléments d'encliquetage (7, 7'.1, 7'.2, 7".1, 7".2, 8) du point de liaison, un espace libre étant également prévu entre les éléments d'encliquetage suivants (7, 7'.1, 7'.2, 7".1, 7".2, 8), ces éléments d'encliquetage (7, 7'.1, 7'.2, 7".1, 7".2, 8) étant respectivement décalés vers l'extérieur d'au moins une demi-largeur d'un élément d'encliquetage (7, 7'.1, 7'.2, 7".1, 7".2, 8) par rapport aux éléments d'encliquetage (7, 7'.1, 7'.2, 7".1, 7".2, 8) précédents en direction du point de liaison.

15. Agencement de fermeture selon au moins l'une quelconque des revendications précédentes, dans lequel les au moins deux composants (1, 2) à relier sont réalisés sous forme identique.
